# EUROPÄISCHE PATENTSCHRIFT

(11) **EP 1 092 291 B1**
(45) Veröffentlichungstag und Bekanntmachung des Hinweises auf die Patenterteilung: **26.03.2003**
(21) Anmeldenummer: 99936393.0
(22) Anmeldetag: 01.06.1999
(51) Int. Cl.: H04B 11/00

(54) **ÜBERTRAGUNG VON DATEN MITTELS ULTRASCHALL**
TRANSMISSION OF DATA BY ULTRASOUND
TRANSMISSION DE DONNEES PAR ULTRASONS

(30) Priorität: 29.06.1998 DE 19828972
(43) Veröffentlichungstag der Anmeldung: 18.04.2001
(73) Patentinhaber: SIEMENS AKTIENGESELLSCHAFT, 80333 München (DE)
(72) Erfinder: HOFMANN, Ludwig, D-85304 Ilmmünster (DE)
(86) Internationale Anmeldenummer: DE9901625
(87) Internationale Veröffentlichungsnummer: WO00001099

(56) Entgegenhaltungen:
- DE-A- 4 121 195
- US-A- 5 155 741
- US-A- 5 412 620
- US-A- 5 461 921

## Beschreibung

Die vorliegende Erfindung bezieht sich auf ein Verfahren zur Übertragung von Daten zwischen einem Kopfteil und einem Basisteil eines Freihandtelefons, wie beispielsweise digitalisierten Sprachdaten, mittels Ultraschall über eine Luftschnittstelle. Die Erfindung bezieht sich weiterhin auf ein Freihand-Telefon, das ein auf diesem Verfahren basierendes Ultraschall-Übertragungssystem verwendet.

Die Erfindung bezieht sich allgemein auf das Gebiet der Übertragung von Daten wie zum Beispiel digitalisierter Sprache ohne Kabel. Die Erfindung hat dabei insbesondere Anwendungen zum Ziel, die eine Reichweite von einigen Metern benötigen, wie es beispielsweise der Fall ist, wenn schnurlose Hörer an Telefone angeschlossen werden sollen. Eine typische Länge der Luftschnittstelle beträgt beispielsweise 1-2 m.

Aus dem Stand der Technik sind verschiedene Arten zur Realisierung einer solchen drahtlosen Übertragung über wenige Meter bekannt. Sämtliche bekannten Techniken weisen indessen Nachteile auf. Als Beispiel ist die Übertragung mittels Infrarot-Strahlen bekannt. Eine solche Übertragung ist preiswert realisierbar, weist indessen den großen Nachteil auf, daß immer eine Sichtverbindung zwischen dem Sender und dem Empfänger bestehen muß, da sonst die Verbindung unterbrochen wird.

Weiterhin ist die Übertragung über Funk (elektromagnetische Wellen) bekannt. Diese Übertragungsweise ist sehr aufwendig in der Realisierung. Darüber hinaus bestehen in verschiedenen Ländern unterschiedliche Vorschriften, so daß es in der Regel unmöglich ist, ein einheitliches Übertragungsverfahren bzw. ein einheitliches Frequenzband weltweit zu verwenden. Darüber hinaus nehmen durch viele, auf derselben Frequenz arbeitende Sender die Störungen (Interferenz) zu. Dies ist insbesondere der Fall in den sogenannten ISM (Industrial, Scientific, Medical)-Frequenzbändern.

Als weitere Übertragungsmöglichkeit ist grundsätzlich die Übertragung mittels Ultraschall bekannt. Die Übertragung mittels Ultraschall ist beispielsweise in ihrer Anwendung auf Fernsteuerungen für Fernseher bekannt, sie weist den Vorteil auf, preiswert herzustellen zu sein. Indessen ist die Ultraschallübertragung für eine Übertragung mit höheren Datenraten, wie es beispielsweise für digitalisierte Sprache notwendig ist, gemäß dem Stand der Technik nicht nutzbar, da die in Räumen auftretenden Echos die Datenübertragung stark stören (Multipath Effekt). Darüber hinaus gibt es viele Störer, wie beispielsweise Schaltnetzteile, die Störsignale mit Frequenzen im Ultraschallbereich erzeugen und dadurch die eigentlich gewünschte Übertragung stören können.

Aus der DE 41 21 196 A1 ist ein Handapparat bekannt, bei dem ein Mikrofon und eine Hörkapsel mit einer Sende- und Empfangseinrichtung verbunden sind. Dabei kann über eine Steuereinrichtung mittels Ultraschall oder Infrarotübertragung der Handapparat mit einem Fernsprechapparat gekoppelt werden.

Aus der US-A-5 412 620 ist ein Apparat bekannt, der es möglich macht, in einem Unterwasserübertragungssystem mittels CDMA-Technologie die Reflexionen an der Wasseroberfläche sowie am Grund zu unterdrücken. Sender und Empfänger haben eine Entfernung von 250 bis 500 m. Die Übertragungsrate beträgt 625 bps.

Die Erfindung hat daher zur Aufgabe, ein Verfahren zur drahtlosen Übertragung von Daten zu ermöglichen, das einerseits günstig zu realisieren ist und andererseits eine Übertragungsrate ermöglicht, wie sie beispielsweise zur Übertragung von digitalisierter Sprache notwendig ist.

Der zentrale Gedanke der Erfindung zur Lösung dieser Aufgabe liegt dabei darin, daß für die Übertragung ein Signal verwendet wird, das durch eine Codespreizung ein breitbandiges Signal erzeugt und durch Korrelation in der Lage ist, auftretende Echos auszublenden.

Erfindungsgemäß ist also ein Verfahren mit den Merkmalen von Anspruch 1 vorgesehen.

Insbesondere zur Verringerung der effektiven Bitrate kann die zu übertragende Information, wie z.B. Sprache vor der Digitalisierung einer Kompressionscodierung unterzogen werden. Die Kompressionscodierung kann die effektive Bitrate beispielsweise von 64 kbit/s auf 1 bis 10 kbit/s reduzieren.

Empfangsseitig wird ein empfangenes Ultraschall-Signal in ein elektrisches Signal umgesetzt. Dieses Signal wird dann A/D gewandelt und gemäß einer CDMA-Technik entspreizt. Dazu wird synchron der senderseitig zum Spreizen verwendete Spreizcode verwendet.

Die Übertragung kann auf einer Mittenfrequenz zwischen 200 und 400 kHz erfolgen, wobei die Information beispielsweise auf ± 100 kHz gespreizt wird.

Erfindungsgemäß ist weiterhin ein Freihand-Telefon mit den Merkmalen von Anspruch 7 vorgesehen.

Weitere Vorteile, Merkmale und Eigenschaften der vorliegenden Erfindung werden nun Bezug nehmend auf Ausführungsbeispiele und weiterhin Bezug nehmend auf die begleitenden Zeichnungen näher erläutert.
Fig. 1 zeigt ein prinzipielles Blockschaltbild der vorliegenden Erfindung,
Fig. 2 zeigt schematisch die Grundlagen der CDMA-Technik, und
Fig. 3 zeigt die Anwendung der vorliegenden Erfindung auf ein Freihand-Telefon.

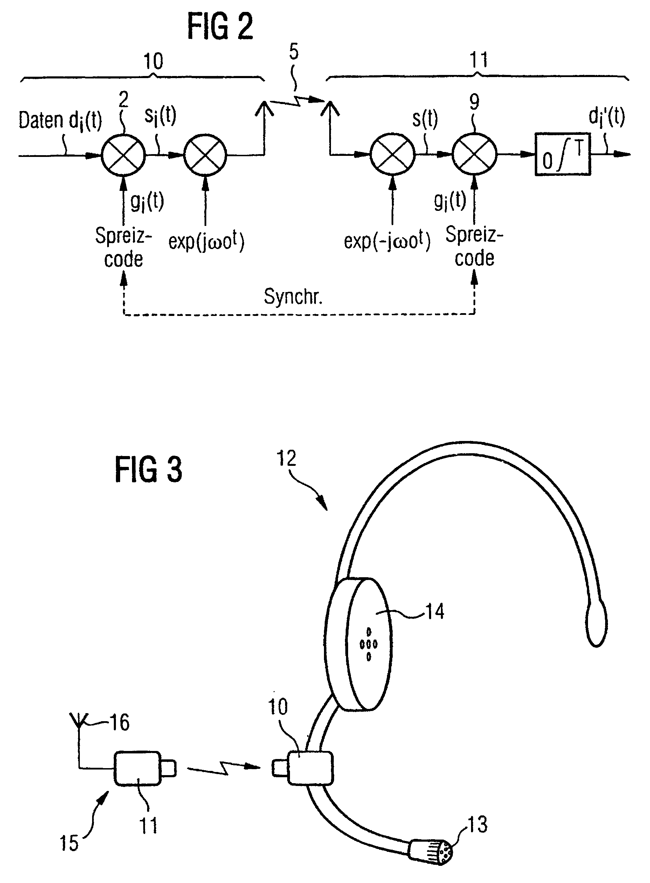

Zuerst soll Bezug nehmend auf Fig. 2 die CDMA-Technik, wie sie bei der vorliegenden Erfindung Verwendung findet, näher erläutert werden.

Gemäß der CDMA (Code Division Multiple Access)-Technik wird allen Teilnehmern gleichzeitig erlaubt, die gesamte zur Verfügung stehende Systembandbreite zu nutzen. Damit es dennoch nicht zu Kollisionen kommt, werden die Einzelsignale mit jeweils unterschiedlichen Spreizcodes versehen, die eine eindeutige Zuordnung der Signale ermöglichen. Die Einzelsignale werden gespreizt, wodurch sich die Bandbreite vervielfacht.

Wie in Fig. 2 ersichtlich, werden die zu übertragenden Daten Dᵢ₍ₜ₎ zunächst mit einem Spreizcode in einer Spreizeinheit 2 in einem Sender 10 über einen größeren Spektralbereich verteilt. Nach der Modulation auf einen hochfrequenten Träger wird das gespreizte Signal über eine Antenne über einen Empfänger 11 abgestrahlt. Der Empfänger 11 erhält dieses Signal von seiner Antenne, demoduliert es und führt eine Despreizung 9 mit einem Spreizcode aus, der zu dem des Senders 10 synchron ist.

Der Empfänger empfängt indessen nicht nur das Signal des gewünschten Senders, sondern auch Signale von anderen Sendern im gleichen Frequenzbereich. Durch den Entspreizvorgang mit dem entsprechenden Spreizcode im Empfänger 11 wird allerdings nur das Signal wieder entspreizt, welches den gleichen und synchronen Spreizcode wie der Empfänger aufweist (siehe Fig. 2). Somit können Störeinflüsse effizient unterdrückt werden.

Die CDMA-Technik läßt sich in die Direct Sequence (DS-)CDMA-Technik und die Frequency Hopping (FH-)CDMA-Technik unterteilen. Bei der DS-CDMA wird die Datenfolge direkt mit der Spreizsequenz multipliziert und anschließend moduliert. Bei der FH-CDMA erfolgt die Spreizung des Datensignals durch Frequenzspringen. Die Trägerfrequenz des Senders 10 wird dabei zeitlich in Abhängigkeit von dem Spreizcode variiert, d.h. entsprechend dem Spreizcode (Spreizsequenz) ändern der Sender und synchron dazu der Empfänger ihre Trägerfrequenz.

Bei der vorliegenden Erfindung lassen sich die Direct Sequence (DS-)CDMA-Technik und die Frequency Hopping (FH-)CDMA-Technik gleichermaßen verwenden.

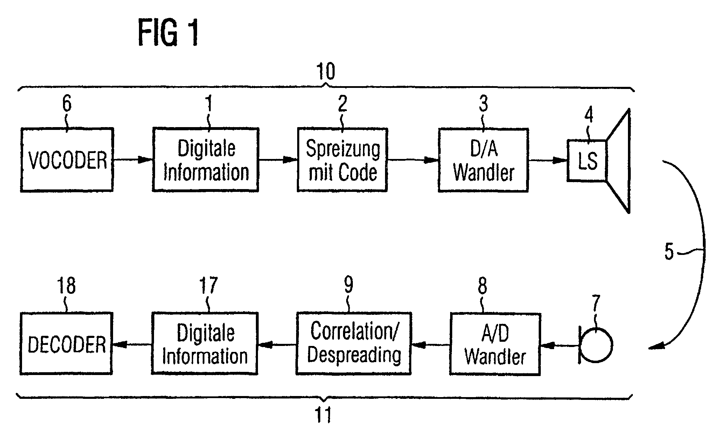

Bezug nehmend auf Fig. 1 soll nun anhand eines Blockschaltbilds die vorliegende Erfindung näher erläutert werden. Ein Kompressionscodierer für Sprache (VOCODER) 6 komprimiert beispielsweise Sprachinformation von 64 kbit/s auf einen Bereich von 1 bis 10 kbit/s. Eine Datenrate von 1 bis 10 kbit/s läßt sich bei Anwendung der vorliegenden Erfindung gut mittels Ultraschall über eine Luftschnittstelle 5 übertragen. Die digitale Information 12 des VOCODERs 6 wird dann gemäß einer CDMA-Technik auf eine größere Bandbreite gespreizt 2. Das Ausgangssignal der Spreizeinheit 2 wird durch einen D/A-Wandler 3 analogisiert und dann mittels eines Ultraschall-Lautsprechers 4 in Ultraschall-Signale umgesetzt. Die Ultraschall-Signale werden dann über eine Luftschnittstelle 5 zu einem Empfänger 11 übertragen.

Die Übertragung von Ultraschall-Signalen ist aus dem Stand der Technik grundsätzlich gut bekannt, so daß auf eine Beschreibung verzichtet werden kann.

Der Empfänger 11 empfängt das übertragene Ultraschall-Signal beispielsweise mittels eines Ultraschall-Mikrofons 7. Das analoge Ausgangssignal des Ultraschall-Mikrofons 7 wird A/D gewandelt 8 und dann einer Entspreizeinheit 9 zugeführt. Die Entspreizung in der Entspreizeinheit 9 wird wie in Fig. 2 dargestellt mittels eines zu dem Sender 10 synchronen Spreizcodes eine Entspreizung des Signals auf eine geringere Bandbreite durchgeführt. Die digitale Ausgangsinformation der Entspreizeinheit 9 wird dann einem Decodierer 18 zugeführt.

Der in Fig. 1 dargestellte Aufbau weist den Vorteil auf, daß er kostengünstig zu realisieren ist und gut integrierbar ist. Dabei ist zu beachten, daß in der bevorzugten Anwendung die Länge der Luftschnittstelle auf einige Meter, bspw. 1-2m beschränkt ist und damit für die Übertragung keine hohe Leistung erforderlich ist.

Die Luftschnittstelle 5 weist vorteilhafterweise eine Länge von wenigen Metern auf. Die Mittenfrequenz der Übertragung kann beispielsweise zwischen 200 und 400 kHz liegen, wobei in diesem Fall eine Spreizung der zu übertragenden Daten auf ± 100 kHz bevorzugt ist. Eine Übertragung mit einer Ultraschallfrequenz von wesentlich mehr als 400 kHz weist den Nachteil einer starken Dämpfung und somit einer kurzen Reichweite auf. Darüber hinaus ist zu beachten, daß die Dämpfung der Ultraschall-Signale von der Frequenz abhängig ist.

Fig. 3 zeigt eine bevorzugte Anwendung der vorliegenden Erfindung. Wie bereits ausgeführt, eignet sich die vorliegende Erfindung insbesondere für Luftschnittstellen mit einer Länge von wenigen Metern, wie es beispielsweise beim Anschluß von schnurlosen Hörern an Telefonen der Fall ist. Fig. 3 zeigt die Anwendung der vorliegenden Erfindung auf ein sogenanntes Freihand-Telefon. Dieses Freihand-Telefon weist ein Kopfteil 12 und ein Basisteil 11 auf. Das Kopfteil 12 weist wiederum einen Kopfhörer 14, ein Mikrofon 13 sowie einen Sender 10 gemäß der vorliegenden Erfindung auf. Das Basisteil 15 kann beispielsweise mittels eines Gürtels oder eines Clips an der Hüfte getragen werden. Die Länge der Luftschnittstelle beträgt somit ca. einen Meter. Das Basisteil 15 weist einen Empfänger 11 der Bezug nehmend auf Fig. 1 erläuterten Art auf. Im übrigen enthält das Basisteil 15 beispielsweise alle übrigen Bauteile eines bekannten drahtlosen Telefons beispielsweise des GSM-Standards und eine Antenne 16. Die eigentliche Leistungsverstärkung findet somit im Basisteil 15 statt, wodurch die Komponenten des Kopfteils 12 klein und leicht gehalten werden können. Die Ultraschall-Übertragung wird dagegen zur Anbindung einer kabellosen Hörereinheit (Kopfteil) an das eigentliche Telephon (Basisteil) verwendet.

Gemäß der vorliegenden Erfindung werden also die normalerweise bei Ultraschall-Übertragung vorliegenden Probleme dadurch gelöst, daß für die Übertragung ein Signal verwendet wird, das durch eine Codespreizung ein breitbandiges Signal erzeugt und durch Korrelation in der Lage ist auftretende Echos auszublenden. Durch die CDMA-Technik werden somit Störungen einerseits durch Vielwegausbreitung (Multipath Effekt) aber auch von anderen Sendern her unterdrückt.

## Patentansprüche

1. Verfahren zur Übertragung von Daten zwischen einem Kopfteil und einem Basisteil eines Freihandtelefons mittels Ultraschall, aufweisend die folgenden Schritte:
- Digitalisierung (1, 6) der zu übertragenden Information,
- Spreizung (2) der digitalisierten Information mittels einer CDMA-Technik, auf ein breiteres Frequenzband,
- D/A-Wandlung (3) der gespreizten Information,
- Umsetzung (4) der D/A-gewandelten, gespreizten Information in Ultraschall, und
- Übertragung der Ultraschall-umgesetzten Information über eine Luftschnittstelle (5).

2. Verfahren nach Anspruch 1,
**dadurch gekennzeichnet,**
**daß** die zu übertragende Information vor der Digitalisierung (1) einem Schritt der Kompressionscodierung (6) unterzogen wird.

3. Verfahren nach Anspruch 1 oder 2,
**dadurch gekennzeichnet,**
**daß** die Kompressionscodierung (6) die effektive Bitrate auf etwa 1-10 kbit/s reduziert.

4. Verfahren nach einem der vorhergehenden Ansprüche,
**dadurch gekennzeichnet,**
**daß** empfangsseitig
- ein empfangenes Ultraschall-Signal in ein elektrisches Signal umgesetzt (7) wird,
- das empfangene, umgesetzte Ultraschall-Signal A/D-umgesetzt (8) wird, und
- das A/D-umgesetzte Signal gemäß einer CDMA-Technik entspreizt (9).

5. Verfahren nach einem der vorhergehenden Ansprüche,
**dadurch gekennzeichnet,**
**daß** die Übertragung auf einer Frequenz zwischen 200 und 400 kHz erfolgt.

6. Verfahren nach einem der vorhergehenden Ansprüche,
**dadurch gekennzeichnet,**
**daß** die Information auf ±100 kHz gespreizt (2) wird.

7. Freihandtelefon mit einem Ultraschall-Übertragungssystem zur Übertragung von Daten zwischen einem Kopfteil und einem Basisteil des Freihandtelefons, aufweisend:
- eine CDMA-Spreizeinheit(2), die eine digitale Information mittels einer CDMA-Technik auf mehrere Trägerfrequenzen spreizt,
- einen D/A-Wandler(3), der die gespreizte Information D/A-umsetzt,
- einen Ultraschall-Wandler (4), der die D/A-gewandelte, gespreizten Information in Ultraschall wandelt, und
- eine Luftschnittstelle (5) zur Übertragung der Ultraschall-umgesetzten Information.

8. Freihandtelefon nach Anspruch 7,
weiterhin aufweisend einen Kompressions-Codierer (6), der die zu übertragende Information vor der Digitalisierung kompressions-codiert.

9. Freihandtelefon nach Anspruch 7 oder 8,
**dadurch gekennzeichnet,**
**daß** der Kompressions-Codierer (6) die effektive Bitrate auf etwa 1-10 kbit/s reduziert.

10. Freihandtelefon nach einem der Ansprüche 7 bis 9,
**dadurch gekennzeichnet,**
**daß** es einen Empfänger (11) aufweist, mit
- einem Ultraschall-Rückwandler (7), der ein empfangenes Ultraschall-Signal in ein elektrisches Signal zurückwandelt,
- einen A/D-Umsetzer (8), der das empfangene, gewandelte Ultraschall-Signal A/D-umgesetzt, und
- eine CDMA-Entspreizer (9), der das A/D-umgesetzte Signal gemäß einer CDMA-Technik entspreizt.

## Claims

1. Method for transmitting data between a head part and a base part of a hands-free telephone by ultrasound, having the following steps:
- digitization (1, 6) of the information to be transmitted,
- spreading (2) of the digitized information, using a CDMA technique, over a wider frequency band,
- D/A conversion (3) of the spread information,
- conversion (4) of the D/A converted spread information to ultrasound, and
- transmission of the information converted to ultrasound via an air interface (5).

2. Method according to Claim 1, **characterized in that** the information to be transmitted is subjected to a step of compression coding (6) before digitization (1).

3. Method according to Claim 1 or 2, **characterized in that** the compression coding (6) reduces the effective bit rate to about 1-10 kbit/s.

4. Method according to one of the preceding claims, **characterized in that**, at the receiving end,
- a received ultrasound signal is converted to an electrical signal (7),
- the received converted ultrasound signal is A/D converted (8), and
- the A/D converted signal is despread using a CDMA technique (9).

5. Method according to one of the preceding claims,
**characterized in that** the transmission takes place at a frequency between 200 and 400 kHz.

6. Method according to one of the preceding claims, **characterized in that** the information is spread (2) over ± 100 kHz.

7. Hands-free telephone comprising an ultrasound transmission system for transmitting data between a head part and a base part of the hands-free telephone, and having:
- a CDMA spreader (2) which spreads digital information over a number of carrier frequencies by means of a CDMA technique,
- a D/A converter (3) which D/A converts the spread information,
- an ultrasound transducer (4) which converts the D/A converted spread information to ultrasound, and
- an air interface (5) for transmitting the information converted to ultrasound.

8. Hands-free telephone according to Claim 7, furthermore having a compression coder (6) which, before digitization, compression codes the information to be transmitted.

9. Hands-free telephone according to Claim 7 or 8, **characterized in that** the compression coder (6) reduces the effective bit rate to about 1-10 kbit/s.

10. Hands-free telephone according to one of Claims 7 to 9, **characterized in that** said telephone has a receiver (11), comprising
- an ultrasound reciprocal transducer (7) which converts a received ultrasonic signal back to an electrical signal,
- an A/D converter (8) which A/D converts the received converted ultrasonic signal, and
- a CDMA despreader (9) which despreads the A/D converted signal using a CDMA technique.

## Revendications

1. Procédé de transmission de données entre une tête et une base d'un téléphone main libre par ultrasons, comprenant les étapes suivantes:
- numérisation (1, 6) de l'information à transmettre,
- étalement (2) de l'information numérisée à l'aide d'une technique CDMA sur une bande de fréquence plus large,
- conversion numérique-analogique (3) de l'information étalée,
- conversion (4) en ultrasons de l'information étalée et convertie de numérique en analogique, et
- transmission de l'information convertie en ultrasons via une interface aérienne (5).

2. Procédé selon la revendication 1, **caractérisé en ce que** l'information à transmettre subit une étape de codage de compression (6) avant d'être numérisée (1).

3. Procédé selon la revendication 1 ou 2, **caractérisé en ce que** le codage de compression (6) réduit le taux de bits effectif à une valeur comprise entre environ 1 à 10 kbit / s.

4. Procédé selon l'une des revendications précédentes, **caractérisé en ce que**, côté récepteur,
- un signal ultrasonore reçu est converti (7) en un signal électrique,
- le signal ultrasonore reçu et converti est converti d'analogique en numérique (8), et
- le signal converti d'analogique en numérique est désétalé (9) selon une technique CDMA.

5. Procédé selon l'une des revendications précédentes, **caractérisé en ce que** la transmission se fait sur une fréquence comprise entre 200 et 400 kHz.

6. Procédé selon l'une des revendications précédentes, **caractérisé en ce que** l'information est étalée (2) sur ± 100 kHz.

7. Téléphone main libre avec un système de transmission par ultrasons pour la transmission de données entre une tête et une base dudit téléphone main libre, comprenant
- une unité d'étalement CDMA (2), laquelle étale une information numérique sur plusieurs fréquences porteuses au moyen d'une technique CDMA,
- un convertisseur numérique-analogique (3), lequel convertit de numérique en analogique l'information étalée,
- un convertisseur ultrasons (4), lequel convertit en ultrasons l'information étalée qui a été convertie de numérique en analogique, et
- une interface aérienne (5) pour la transmission de l'information convertie en ultrasons.

8. Téléphone main libre selon la revendication 7, comprenant, en outre, un codeur compresseur (6), lequel code l'information à transmettre en la comprimant et ce, avant qu'elle ne soit numérisée.

9. Téléphone main libre selon la revendication 7 ou 8, **caractérisé en ce que** le codeur compresseur (6) réduit le taux de bits effectif à une valeur comprise entre environ 1 et 10 kbit / s.

10. Téléphone main libre selon l'une des revendications 7 à 9, **caractérisé en ce qu'**il présente un récepteur (11) comprenant
- un reconvertisseur d'ultrasons (7), lequel reconvertit en un signal électrique le signal ultrasonore reçu,
- un convertisseur analogique-numérique (8), lequel convertit d'analogique en numérique le signal ultrasonore converti qu'il a reçu, et
- un désétaleur COMA (9), lequel désétale selon une technique CDMA le signal converti d'analogique en numérique.
